# EUROPEAN PATENT APPLICATION

(11) **EP 4 012 526 A1**
(43) Date of publication of application: **15.06.2022**
(21) Application number: 21212065.3
(22) Date of filing: 02.12.2021
(51) Int. Cl.: G05B 23/02, G07C 5/08

(54) **SYSTEMS AND METHODS FOR DIAGNOSING EQUIPMENT**

(30) Priority: 09.12.2020 US 202063123220 P; 10.11.2021 US 202117523326
(71) Applicant: Transportation IP Holdings, LLC, Norwalk, CT 06851 (US)
(72) Inventor: Karunaratne, Milan, Orange (US); Ramaiah, Naveenkumar, Bengaluru (IN)
(74) Representative: Laufhütte, Dieter

(57) **Abstract**

A method includes recording operation of equipment into an audio file and transforming the audio file into image data. The image data is input into a machine learning model to determine whether the image data is indicative of a desired operation of the equipment or an undesired operation of the equipment. A system includes an audio sensor configured to record operation of equipment and create an audio file, and one or more processors. The one or more processors transform the audio file into image data and input the image data into the machine learing model to determine whether the image data is indicative of a desired operation of the equipment or an undesired opertion of the equipmnt.

## Description

### CROSS REFERENCE TO RELATED APPLICATION

This application claims priority to U.S. Application 63/123,220, filed 09-December-2020, the entire disclosure of which is incorporated herein by reference.

### BACKGROUND

### Technical Field.

The disclosed subject matter described herein relates to systems and methods for diagnosing equipment.

### Discussion of Art.

Equipment, such as parts of vehicles, may be diagnosed to detect parts that may not be operating in expected or desirable ways or modes. The diagnosis may vary depending on the subjectivity of the individual conducting the diagnosis, which may lead to inaccurate results. The diagnosis may not take into account previous diagnoses, which makes it difficult to determine whether the current diagnoses is correct. If operation of the equipment is diagnosed incorrectly as desired, a failure of the equipment may result in the equipment (e.g., a locomotive) not operating as desired. Conversely, if a part is inspected and incorrectly diagnosed as being damaged, defective, or failed, unnecessary replacement of the part results in removal of the equipment from service and additional repair costs. Therefore, a need exists for improved ways to diagnose issues with equipment.

### BRIEF DESCRIPTION

In accordance with one example or aspect, a method may include recording audio of operation of equipment to create an audio file and transforming the audio file into image data. The method may include inputting the image data into a machine learning model to determine whether the image data is indicative of a desired operation of the equipment or an undesired operation of the equipment.

In accordance with one example or aspect, a system may include an audio sensor to record operation of equipment to generate an audio file, and one or more processors. The one or more processors may transform the audio file into image data and input the image data into a machine learning model that determines whether the image data is indicative of a desired operation of the equipment or an undesired operation of the equipment.

In accordance with one example or aspect, a method may include recording operation of a component of a vehicle system into an audio file and transforming the audio file into image data. The method may include inputting the image data into a machine learning model to determine whether the image data is indicative of a desired operation of the component or an undesired operation of the component.

### BRIEF DESCRIPTION OF THE DRAWINGS

The inventive subject matter may be understood from reading the following description of non-limiting embodiments, with reference to the attached drawings, wherein below:
FIG. 1 schematically illustrates a system for diagnosing equipment according to one embodiment;
FIG. 2 schematically illustrates a method for diagnosing equipment according to one embodiment;
FIG. 3 represents image data indicative of expected operation of equipment;
FIG. 4 represents image data indicative of undesired operation of equipment according to a first failure mode;
FIG. 5 represents image data indicative of undesired operation of equipment according to a second failure mode;
FIG. 6 schematically illustrates a method for diagnosing equipment according to one embodiment; and
FIG. 7 schematically illustrates a method for diagnosing equipment according to one embodiment.

### DETAILED DESCRIPTION

One or more embodiments of the subject matter described herein relate to a device that can evaluate abstract or discrete audio signatures and provide feedback and/or assessments of equipment. Deep learning techniques of a machine learning model can diagnose complex equipment to determine whether the operation of the equipment is operating as desired or is operating in an undesired manner. If the operation of the equipment is undesired, the device can select an undesired operational mode from a plurality of different operational modes. The operation of the equipment can be changed based on the evaluation, or a repair of the equipment can be directed based on the evaluation.

Embodiments of the subject matter described herein relate to methods and systems that can evaluate a component in a system. The component may be part of a vehicle system or a power generating system. The operation of the component may be modified to provide for capturing audio of the component. The sound generated by other components of the system may be filtered out. The other components of the system may be deactivated to allow capture of audio from the component to be evaluated and diagnosed.

While one or more embodiments are described in connection with a rail vehicle system, not all embodiments relate to rail vehicle systems. Further, embodiments described herein extend to multiple types of vehicle systems. Suitable vehicle systems may include rail vehicle, automobiles, trucks (with or without trailers), buses, marine vessels, aircraft, mining vehicles, agricultural vehicles, and off-highway vehicles. Suitable vehicle systems described herein can be formed from a single vehicle. In other embodiments, the vehicle system may include multiple vehicles that move in a coordinated fashion. A suitable vehicle system may be a rail vehicle system that travels on tracks, or a vehicle system that travels on roads or paths. With respect to multi-vehicle systems, the vehicles can be mechanically coupled with each other (e.g., by couplers), or they may be virtually or logically coupled but not mechanically coupled. For example, vehicles may be communicatively but not mechanically coupled when the separate vehicles communicate with each other to coordinate movements of the vehicles with each other so that the vehicles travel together (e.g., as a convoy, platoon, swarm, fleet, and the like).

With regard to the equipment or component, suitable examples may include equipment that is subject to periodic diagnosis. In one embodiment, the component may be an engine or a component of the vehicle system. For example, the equipment may be a high-pressure fuel pump for an engine of a locomotive. In another example, the component may be an electrical motor. Rotating equipment, generally, is amenable to diagnosis using the inventive method.

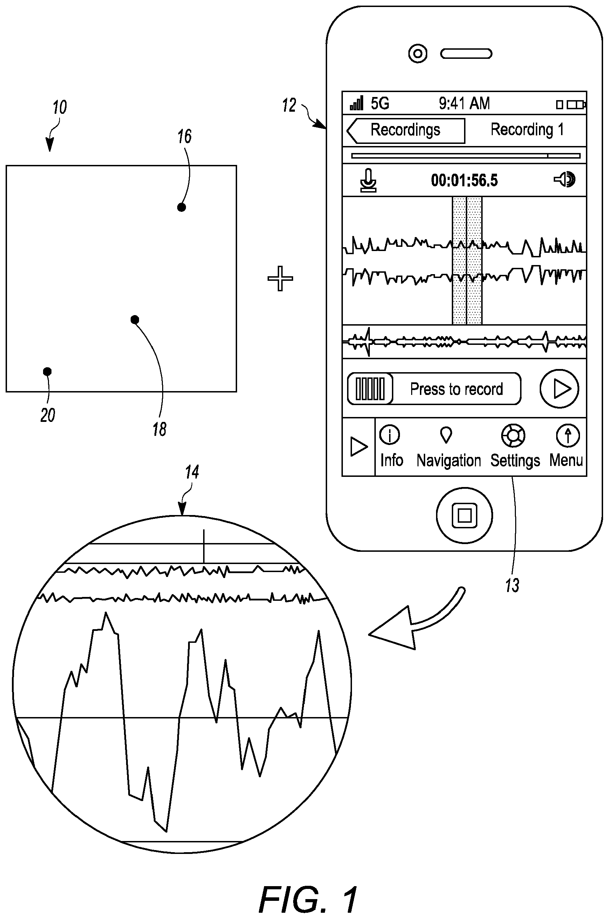

Referring to FIG. 1, a piece of equipment 10 may be diagnosed using an audio recording device 12. According to one embodiment, the audio recording device may be a mobile, handheld device. The mobile, handheld device may be a smartphone, a tablet computer, a personal digital assistant (PDA), a computer (e.g., a laptop computer), or the like. The audio recording device may include an audio capture device, e.g., a microphone, a vibration sensor (e.g., an accelerometer), one or more piezoelectric bodies, or a probe that may contact the equipment or a housing of the equipment, that may capture audio indicative of operation of equipment that is to be diagnosed and store the audio as an audio file 14. This audio file may be a raw audio file. The audio recording device may be connected to an audio capture device such as an external sensor or a probe or a microphone, for example by a USB connection. The sensor or probe or microphone may be placed in proximity to and/or in contact with the equipment part to generate the raw audio file. The audio recording device may communicate the audio file to one or more processors, which may execute instructions stored in a memory to use a machine learning model to make determinations and evaluations regarding the component. For example, the determination may be related to whether the equipment part is operating in a desired mode or an undesired mode. With regard to close proximity, the distance may be selected with reference to application specific parameters. In one embodiment, proximity may be within a few inches of the audio capture device to a portion of the component.

Suitable audio files may include lossy and non-lossy file types. Example of audio file types may include .wav, .mp3, .wma, .aac, .ogg, .midi, .aif, .aifc, .aiff, .au, and .ea. File type may be selected based at least in part on the compression ratio, compression algorithm, and other application specific parameters.

According to an example, the equipment is a high-pressure fuel pump of a vehicle. The raw audio file may be generated while the vehicle engine is running in an idle (i.e., unloaded or non-propulsion-generating) condition or state. The audio recording device or audio capture device may be placed in close proximity to the fuel pump and the audio recording device or audio capture device may be moved between different locations (e.g., from a first recording location 16, to a second recording location 18, to a third recording location 20, and so on). While the illustrated example shows recording in three locations, optionally, recordings may occur at fewer locations (e.g., a single location or two locations) or more than three locations. As shown in FIG. 1, the recording locations may extend from the top to the bottom of the equipment. The audio recording device or audio capture device may be hovered over each of the recording locations for a period of time as the audio recording device or audio capture device is moved from the first to the second to the third recording location. According to one embodiment, the operation of the high-pressure fuel pump may be recorded for a period of time, for example 30 seconds, one minute, or another length of time. The audio recording device or audio capture device may be used to output two or more audio files. For example, the audio recording device or audio capture device may output a first audio file of a first fuel pump on a first side of a vehicle and may capture a second audio file of a second fuel pump on a second, opposite side of the vehicle.

The audio recording device or audio capture device may include an interface 13 to accept input regarding recording conditions. For example, the audio recording device or audio capture device may accept input that indicates whether a housing or a cover is on or off the equipment or whether the housing or cover is removed during recording. One or more processors of the audio recording device may change the operation of the equipment to accentuate at least one sound of interest prior to or during recording of the audio of the operation. The one or more processors may change the operation of the equipment by communicating with a vehicle or vehicle system (e.g., a locomotive) to change a throttle or an engine speed of the vehicle system. The one or more processors of the audio recording device may electronically filter the noise associated with the running engine.

The one or more processors may isolate the sounds generated from operation of the equipment. According to one embodiment, the equipment to be diagnosed is a fuel pump and the vehicle system charges the pressure in the fuel pump but does not operate the engine so the engine does not generate background noise. The one or more processors may actuate other equipment or components operably coupled with the equipment being examined to determine the effect that actuation has on vibration or sounds generated by the equipment under examination. For example, fuel injectors that receive fuel via the fuel pump may be actuated. The one or more processors of the audio recording device may deactivate one or more other powered devices, e.g., an engine, to prevent generation or other sounds generated by the one or more powered devices during recording of the audio of the operation of the equipment or component of the vehicle system. The one or more processors may one or more of change the operation of the equipment part based on a failure mode that is identified or direct repair of the equipment part based on a failure mode that is identified.

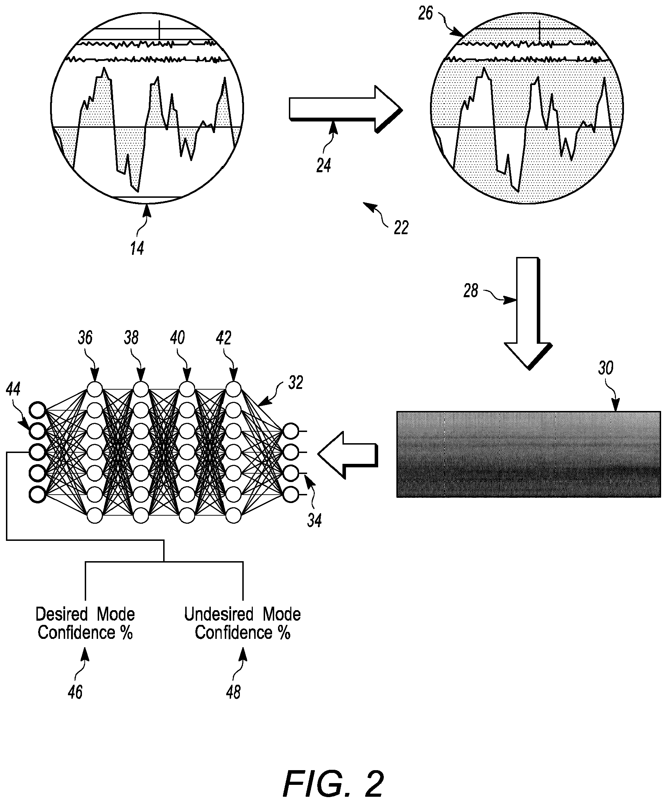

Referring to FIG. 2, a method 22 for diagnosing equipment according to one embodiment includes processing 24 the raw audio file into a normalized audio file 26. The processing may include one or more of adding random noise to the raw audio file, shifting or changing the pitch of the raw audio file, or resampling the raw audio file to a different time. For example, the raw audio file may be resampled from 30 seconds to 15 seconds to process the raw audio file to the normalized audio file.

The normalized audio file undergoes a transformation 28 to image data 30, for example a mel spectrogram. The mel spectrogram is provided to an input layer 34 of a machine learning model 32. According to one embodiment, the machine learning model is a deep learning machine learning model that includes a plurality of hidden layers 36, 38, 40, 42. The hidden layers are located between the input layer and an output layer 44 of the algorithm of the machine learning model. The algorithm applies weights to the inputs (e.g., mel spectrograms) and directs the inputs through an activation function as the output. The hidden layer performs nonlinear transformations of the inputs entered into the input layer.

In one embodiment, the machine learning model is an unsupervised machine learning model. The hidden layers may vary depending on the function of the machine learning model, and the hidden layers may vary depending on their associated weights. The hidden layers allow for the function of the machine learning model to be broken down into specific transformations of the input data. Each hidden layer function may be provided to produce a defined output. For example, one hidden layer may be used to identify what type of equipment part is being diagnosed. The hidden layer may identify the equipment as a high-pressure fuel pump. While the functions of each hidden layer are not enough to independently determine if the image data represents equipment that is operating as desired, the hidden layers function jointly within the machine learning model to determine the probability that the input image data (e.g., mel spectrogram) represents a desired operation of the equipment.

The machine learning model may be provided with image data through the input layer. The image data may be from similar equipment, for example from other high-pressure fuel pumps. The input image data may be from one or more previous diagnoses of the same equipment. For example, the machine learning model may include previous image data of a high-pressure fuel pump and determine that the high-pressure fuel pump has been diagnosed a previous number of times, for example five times. The machine learning model may include the previous image data of the previous five diagnoses. The machine learning model may to determine that the equipment has been previously diagnosed a certain number of times and determined to be more likely operating as desired than operating as undesired. The machine learning model may determine from the input data that the equipment being diagnosed is older than other equipment that has been diagnosed and thus determine a degradation of the equipment over time.

According to one embodiment, the machine learning model may reference results of the model concurrently with the recording operation to provide more accurate decision making. Referring again to FIG. 1, as the audio recording device or audio capture device is moved from one recording location to another recording location the results at one or more previous recording locations may be used at the next recording location as a concurrent reference point. As the audio recording device or audio capture device is moved from, for example, cylinder to cylinder in an engine or from cylinder to cylinder in a pump or from pump to pump in the case of multiple pumps, the algorithm of the machine learning model may reference the prior equipment part behaviors and assessments and may adjust the thresholds concurrently specific to the equipment being diagnosed. The machine learning model may adjust prior assessments of equipment and equipment parts after completion of the evaluation of the entire equipment or system.

The machine learning model may be stored in a memory of the audio recording device and executed by the one or more processors. The memory of the audio recording device may store the input data of previous diagnoses, either from diagnoses previously performed by the audio recording device or from other audio recording devices. The input data for the machine learning model is unlabeled and unstructured and through operation of the hidden layers the machine learning model detects patterns in the input image data and detects any anomaly in the patterns.

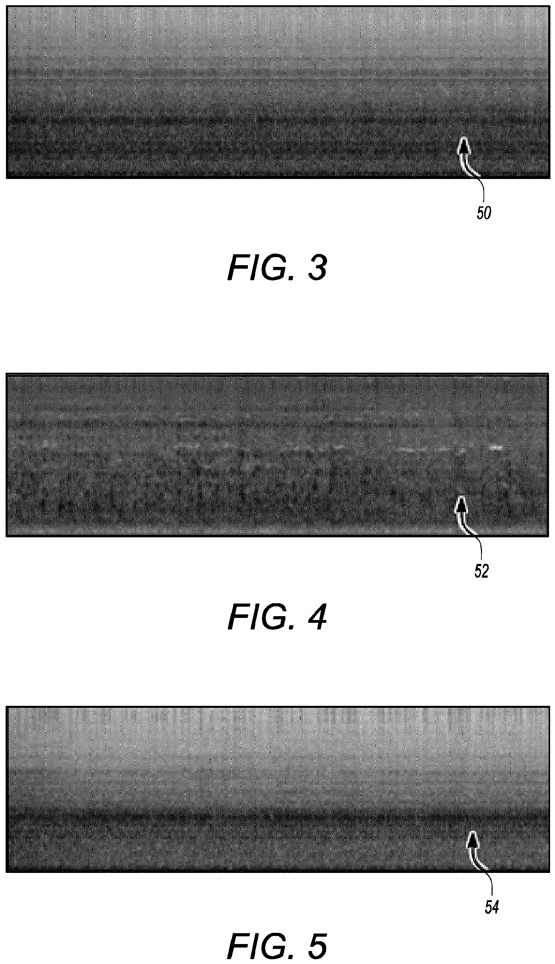

The output layer of the machine learning model may output a result 46 that indicates the equipment is operating in a desired mode, with a confidence level that indicates a percentage that the result is correct. The output layer may alternatively output a result 48 that indicates that the equipment is operating in an undesired mode, with a confidence level that indicates a percentage that the result is correct. According to one embodiment, the result may be indicative of a failure mode of the equipment. For example, the result may indicate no failure mode, i.e., that the equipment is operating as desired within established parameters. Referring to FIG. 3, the image data 50 input into the machine learning model is determined to represent expected equipment. According to one embodiment, the result determined by the machine learning model may indicate equipment operating in an undesired mode. Referring to FIG. 4, as one example, the image data may include an irregular, erratic pattern 52 that is indicative of undesired operation of the high-pressure fuel pump. As another example, referring to FIG. 5, the image data may include visible cavitation 54 that is indicative of undesired operation of the high-pressure fuel pump.

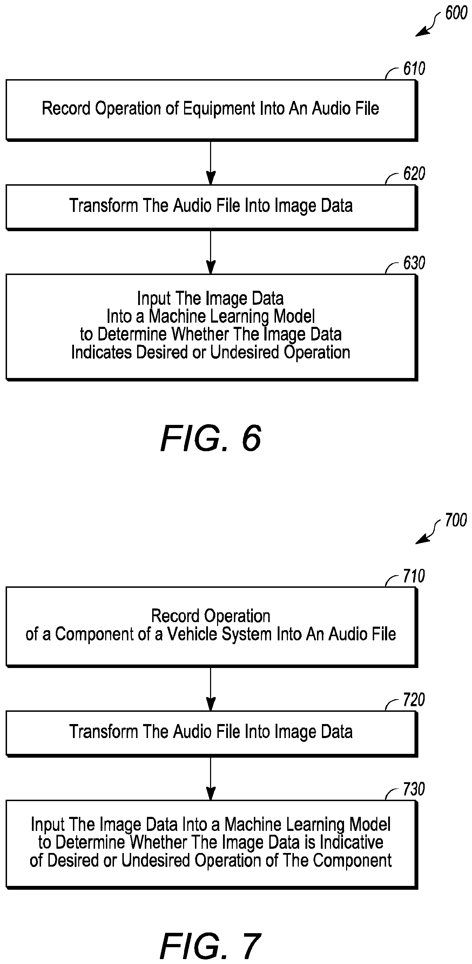

Referring to FIG. 6, a method 600 includes a step 610 of recording operation of equipment to create an audio file and a step 620 of transforming the audio file into image data. The method includes a step 630 of inputting the image data into a machine learning model to determine whether the image data is indicative of a desired operation of the equipment or an undesired operation of the equipment.

Referring to FIG. 7, a method 700 includes a step 710 of recording operation of a component of a vehicle system to create an audio file and a step 720 of transforming the audio file into image data. The method further includes a step 730 of inputting the image data into a machine learning model that determines whether the image data is indicative of a desired operation of the component or an undesired operation of the component.

The one or more processors may transform one or more audio files into image data. For example, the audio data of the normalized audio file may be transformed into the image data of the mel spectrogram using a Fast Fourier Transform (FFT) using, for example a window function having a determined window size. The analysis may use a determined hop size to sample the audio file a determined number of times in between successive windows. The FFT for each window may be computed to transform from the time domain to the frequency domain. The mel scale may be generated by separating the entire frequency spectrum into a determined number of evenly spaced frequencies. The spectrogram may then be generated by, for each window, decomposing the magnitude of the signal into its components, the components corresponding to the frequencies in the mel scale. In other embodiments, other transform algorithms may be employed. Suitable transformation models may include Laplace transforms, Wavelet transforms, and Kramers-Kronig tranforms.

In one embodiment, a method may include recording operation of equipment to create an audio file and transforming the audio file into image data. The method may include inputting the image data into a machine learning model to determine whether the image data is indicative of a desired operation of the equipment or an undesired operation of the equipment.

The method may include determining a failure mode of the equipment in the undesired operation of the equipment. The method may include one or more of changing the operation of the equipment based on the failure mode that is determined or directing repair of the equipment based on the failure mode that is determined.

The method may include changing the operation of the equipment to accentuate at least one audio of interest prior to or during recording of the operation of the equipment. The equipment may be included in a vehicle system and changing the operation of the equipment may include changing a throttle or an engine speed of the vehicle system. The equipment may operate in conjunction with one or more other powered devices and the method may include filtering out audio generated by the one or more other powered devices from the operation of the equipment that is recorded. The equipment may operate in conjunction with one or more other powered devices and the method may include deactivating the one or more other powered devices while the equipment continues to operate to prevent generation of other audio generated by the one or more other powered devices during recording of the operation of the equipment.

The method may include receiving input indicative of whether a housing of the equipment is removed during recording of the audio of the operation of the equipment. The machine learning model may determine whether the image data is indicative of a desired operation of the equipment or an undesired operation of the equipment based on whether the housing of the equipment is removed during recording of the audio. The recording of operation of the equipment into the audio file may include recording audio operation at a plurality of locations. Inputting the image data into the machine learning model may include inputting prior image data at the plurality of locations into the machine learning model concurrently with inputting the image data into the machine learning model.

A system may include an audio sensor to record audio of operation of equipment into an audio file, and one or more processors. The one or more processors may transform the audio file into image data and input the image data into a machine learning model to determine whether the image data is indicative of a desired operation of the equipment or an undesired operation of the equipment.

The one or more processors may determine a failure mode of the equipment in the undesired operation of the equipment. The one or more processors may change the operation of the equipment based on the failure mode that is determined or direct repair of the equipment based on the failure mode that is determined. The one or more processors may change the operation of the equipment to accentuate at least one audio of interest prior to or during recording of the audio of the operation of the equipment. The equipment may be included in a vehicle system and the one or more processors may change the operation of the equipment by changing a throttle or an engine speed of the vehicle system.

The equipment may operate in conjunction with one or more other powered devices, and the one or more processors may filter out audio generated by the one or more other powered devices from the audio of the operation of the equipment that is recorded. The equipment may operate in conjunction with one or more other powered devices, and the one or more processors may deactivate the one or more other powered devices while the equipment continues to operate to prevent generation of other audio generated by the one or more other powered devices during recording of the operation of the equipment.

The one or more processors may receive input indicative of whether a housing of the equipment is removed during recording of the audio of the operation of the equipment, and the machine learning model may determine whether the image data is indicative of a desired operation of the equipment or an undesired operation of the equipment based on whether the housing of the equipment is removed during recording of the audio. The audio file may be recorded at a plurality of locations of the equipment and the one or more processors may input prior image data at the plurality of locations into the machine learning model concurrently with inputting the image data into the machine learning model.

A method may include recording audio of operation of a component of a vehicle system into an audio file and transforming the audio file into image data. The method may further include inputting the image data into a machine learning model to determine whether the image data is indicative of a desired operation of the component or an undesired operation of the component.

The method may include determining a failure mode of the equipment in the undesired operation of the equipment and changing the operation of the equipment based on the failure mode that is determined or directing repair of the equipment based on the failure mode that is determined. The method may further include changing the operation of the component to accentuate at least one audio of interest prior to or during recording of the audio of the operation of the component. The method may further include filtering out audio generated by the one or more other components of the vehicle system from the operation of the component that is recorded. The method may further include deactivating an engine of the vehicle system while the component continues to operate to prevent generation of other audio generated by the engine during recording of the operation of the component.

The method may include receiving input indicative of whether a housing of the equipment is removed during recording of the audio of the operation of the equipment, wherein the machine learning model may determine whether the image data is indicative of a desired operation of the equipment or an undesired operation of the equipment based on whether the housing of the equipment is removed during recording of the audio. The method may further include inputting prior image data at a plurality of locations of the component into the machine learning model concurrently with inputting the image data into the machine learning model.

In one embodiment, the one or more processors may determine more graduated data about the equipment or the component. That is, rather than whether it is operating in a desired or undesired state but further the degree to which it is operating in such state. The score may be on a graduated scale, and it may correspond to expected remaining useful life of the component. That information, then, may be used to schedule maintenance, repair or replacement at a future date that is prior to a calculated failure date. The calculated failure date may have margins of error. The margin of error may be determined, on one example, on the criticality of the component and the impact of its failure. In one embodiment, that information may be used to modify operation of the equipment or the component. For example, if the equipment or the component is used in less stressful duty cycles it may last longer than if it is used to maximum capability.

In one embodiment, the controllers or systems described herein may have a local data collection system deployed and may use machine learning to enable derivation-based learning outcomes. The controllers may learn from and make decisions on a set of data (including data provided by the various sensors), by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may be machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost, K-nearest neighbors (KNN), a priori algorithms, and the like. In embodiments, certain machine learning algorithms may be used (e.g., for solving both constrained and unconstrained optimization problems that may be based on natural selection). In an example, the algorithm may be used to address problems of mixed integer programming, where some components restricted to being integer-valued. Algorithms and machine learning techniques and systems may be used in computational intelligence systems, computer vision, Natural Language Processing (NLP), recommender systems, reinforcement learning, building graphical models, and the like. In an example, machine learning may be used making determinations, calculations, comparisons and behavior analytics, and the like.

In one embodiment, the controllers may include a policy engine that may apply one or more policies. These policies may be based at least in part on characteristics of a given item of equipment or environment. With respect to control policies, a neural network can receive input of a number of environmental and task-related parameters. These parameters may include, for example, operational input regarding operating equipment, data from various sensors, location and/or position data, and the like. The neural network can be trained to generate an output based on these inputs, with the output representing an action or sequence of actions that the equipment or system should take to accomplish the goal of the operation. During operation of one embodiment, a determination can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the controller may use evolution strategies techniques to tune various parameters of the artificial neural network. The controller may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models are obtained, they may be evaluated on their performance using a determined success metric. The best model is selected, and the vehicle controller executes that plan to achieve the desired input data to mirror the predicted best outcome scenario. Additionally, the success metric may be a combination of the optimized outcomes, which may be weighed relative to each other.

As used herein, the terms "processor" and "computer," and related terms, e.g., "processing device," "computing device," and "controller" may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. A computer-readable medium may be, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

Where any or all of the terms "comprise", "comprises", "comprised" or "comprising" are used in this specification (including the claims) they are to be interpreted as specifying the presence of the stated features, integers, steps or components, but not precluding the presence of one or more other features, integers, steps or components.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and clauses, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and clauses, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A method, comprising:
recording operation of equipment to create an audio file;
transforming the audio file into image data; and
inputting the image data into a machine learning model configured to determine whether the image data is indicative of a desired operation of the equipment or an undesired operation of the equipment.

2. The method of claim 1, further comprising:
determining a failure mode of the equipment in the undesired operation of the equipment and preferably further comprising one or more of:
changing the operation of the equipment based on the failure mode that is determined; or
directing repair of the equipment based on the failure mode that is determined.

3. The method of claim 1, further comprising:
changing the operation of the equipment to accentuate at least one audio of interest prior to or during recording of the operation of the equipment, wherein the equipment is preferably included in a vehicle system and changing the operation of the equipment includes changing a throttle or an engine speed of the vehicle system.

4. The method of claim 1, wherein the equipment operates in conjunction with one or more other powered devices, the method further comprising:
filtering out audio generated by the one or more other powered devices from the e operation of the equipment that is recorded.

5. The method of claim 1, wherein the equipment operates in conjunction with one or more other powered devices, the method further comprising:
deactivating the one or more other powered devices while the equipment continues to operate to prevent generation of other audio generated by the one or more other powered devices during recording of the operation of the equipment.

6. The method of claim 1, further comprising:
receiving input indicative of whether a housing of the equipment is removed during recording of the audio of the operation of the equipment, wherein the machine learning model is configured to determine whether the image data is indicative of a desired operation of the equipment or an undesired operation of the equipment based on whether the housing of the equipment is removed during recording of the audio.

7. The method of claim 1, wherein recording audio of operation of equipment into the audio file using the handheld device comprises recording audio operation at a plurality of locations and inputting the image data into the machine learning model comprises inputting prior image data at the plurality of locations into the machine learning model concurrently with inputting the image data into the machine learning model.

8. A system, comprising:
an audio sensor configured to record operation of equipment and thereby to generate an audio file; and
one or more processors configured to:
transform the audio file into image data; and
input the image data into a machine learning model configured to determine whether the image data is indicative of a desired operation of the equipment or an undesired operation of the equipment.

9. The system of claim 8, wherein the one or more processors are further configured to:
determine a failure mode of the equipment in the undesired operation of the equipment, wherein the one or more processors preferably are further configured to:
change the operation of the equipment based on the failure mode that is determined; or
direct repair of the equipment based on the failure mode that is determined.

10. The system of claim 8, wherein the one or more processors are further configured to:
change the operation of the equipment to accentuate at least one audio of interest prior to or during recording of the operation of the equipment, wherein the equipment is preferebly included in a vehicle system and changing the operation of the equipment includes changing a throttle or an engine speed of the vehicle system.

11. The system of claim 8, wherein the equipment operates in conjunction with one or more other powered devices, and the one or more processors are further configured to:
filter out audio generated by the one or more other powered devices from the operation of the equipment that is recorded.

12. The system of claim 8, wherein the equipment operates in conjunction with one or more other powered devices, and the one or more processors are further configured to:
deactivate the one or more other powered devices while the equipment continues to operate to prevent generation of other audio generated by the one or more other powered devices during recording of the operation of the equipment,
and/or wherein the one or more processors are further configured to:
receive input indicative of whether a housing of the equipment is removed during recording of the operation of the equipment, wherein the machine learning model is configured to determine whether the image data is indicative of a desired operation of the equipment or an undesired operation of the equipment based on whether the housing of the equipment is removed during recording of the audio.

13. The system of claim 10, wherein the audio file is recorded at a plurality of locations of the equipment and the one or more processors are further configured to:
input prior image data at the plurality of locations into the machine learning model concurrently with inputting the image data into the machine learning model.

14. A method, comprising:
recording operation of a component of a vehicle system into an audio file;
transforming the audio file into image data; and
inputting the image data into a machine learning model configured to determine whether the image data is indicative of a desired operation of the component or an undesired operation of the component.

15. The method of claim 14, further comprising one or more of:
determining a failure mode of the equipment in the undesired operation of the equipment and changing the operation of the equipment based on the failure mode that is determined or directing repair of the equipment based on the failure mode that is determined;
changing the operation of the component to accentuate at least one audio of interest prior to or during recording of the operation of the component;
filtering out audio generated by the one or more other components of the vehicle system from the audio of the operation of the component that is recorded; .
deactivating an engine of the vehicle system while the component continues to operate to prevent generation of other audio generated by the engine during recording of the operation of the component;
receiving input indicative of whether a housing of the equipment is removed during recording of the audio of the operation of the equipment, wherein the machine learning model is configured to determine whether the image data is indicative of a desired operation of the equipment or an undesired operation of the equipment based on whether the housing of the equipment is removed during recording of the audio; or
inputting prior image data at a plurality of locations of the component into the machine learning model concurrently with inputting the image data into the machine learning model.
